# EUROPEAN PATENT SPECIFICATION

(11) **EP 1 871 139 B1**
(45) Date of publication and mention of the grant of the patent: **30.07.2008**
(21) Application number: 07012275.9
(22) Date of filing: 22.06.2007
(51) Int. Cl.: H04Q 7/38

(54) **Method, register and system for group call**
Verfahren, Register und System für Gruppenruf
Procédé, registre et système pour service d'appel de groupe

(30) Priority: 23.06.2006 CN 200610093909
(43) Date of publication of application: 26.12.2007
(73) Proprietor: Huawei Technologies Co., Ltd., Shenzhen, Guangdong Province 518129 (CN)
(72) Inventor: Bao, Guoqing, Shenzhen Guangdong Province 518129 (CN); Shen, Minjun, Shenzhen Guangdong Province 518129 (CN); Yang, Changdong, Shenzhen Guangdong Province 518129 (CN); Huang, Dongchuan, Shenzhen Guangdong Province 518129 (CN); Meng, Liang, Shenzhen Guangdong Province 518129 (CN); Wang, Baoyi, Shenzhen Guangdong Province 518129 (CN); Yang, Yanping, Shenzhen Guangdong Province 518129 (CN)
(74) Representative: Goddar, Heinz J.

(56) References cited:
- WO-A-20/05055632
- "Digital cellular telecommunications system (Phase 2+); Voice Group Call Service (VGCS); Stage 2 (3GPP TS 43.068 version 6.7.0 Release 6)" ETSI STANDARDS, EUROPEAN TELECOMMUNICATIONS STANDARDS INSTITUTE, SOPHIA-ANTIPO, FR, vol. 3-CN1, no. V670, March 2006 (2006-03), XP014034469 ISSN: 0000-0001
- 3GPP TSG-CT1: "Extension of Group ID" TDOC C1-061908, 28 August 2006 (2006-08-28), XP002450954

## Description

### Field of the Invention

The present invention relates to the field of telecommunications, and more particularly, to a method, a register and a system for group call.

### Background of the Invention

Global System for Mobile Communication (GSM) adopts digital communication technique and unified network standards to guarantee quality of communication and to provide more services to users. GSM for Railway (GSM-R) is a railway dedicated mobile communication system constructed by adding trunking communication functions to GSM. In the GSM-R system, the added trunking communication functions include the Advanced Speech Call Item (ASCI) function defined under GSM Phase 2+ standard.

The ASCI function includes three basic services: Enhanced Multi-Level Precedence and Pre-emption (EMLPP), Voice Group Call Service (VGCS) and Voice Broadcast Service (VBS).

In these services, the VGCS service realizes the function of "multi-speakers, multi-listeners". The VBS service realizes the function of "single-speaker, multi-listeners". In other words, the VBS service can allow only one speaker and unlimited listeners theoretically. The VBS service may be regarded as a special VGCS service in terms of functionality. The VGCS service and the VBS service realize a one-point-to-multiple-points voice communication pattern, which breaks through the limitation of point-to-point communication, and can establish a call quickly.

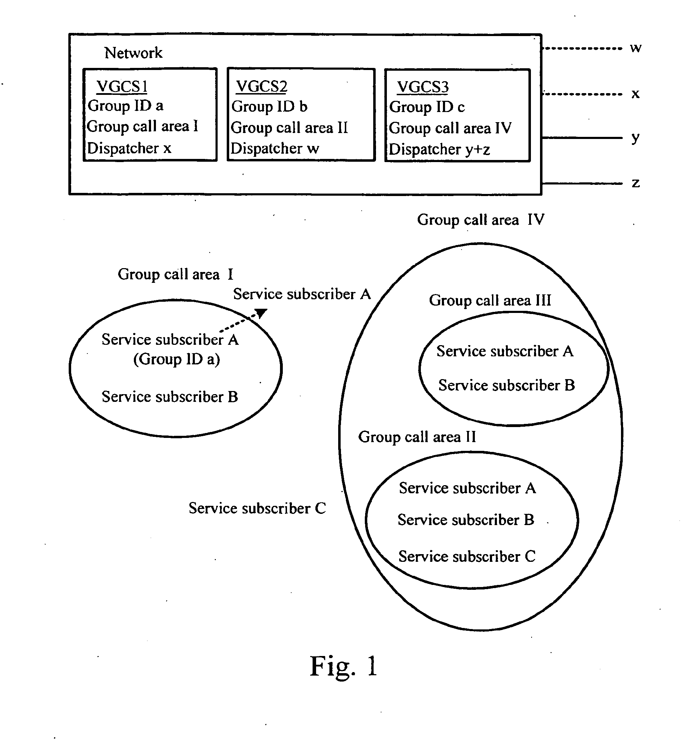

A calling subscriber of a VGCS service establishes a connection of voice group call with destination subscribers by initiating a VGCS service call. Figure 1 is a schematic diagram of the VGCS service call. As shown in Figure 1, the network includes multiple predefined voice group calls VGCS1, VGCS2, VGCS3, etc.. Each of the voice group calls is correlated with a group identification (hereinafter referred to as group ID), a group call area, and one or more dispatchers. A group ID is a digital number used for grouping VGCS service subscribers. Referring to Figure 1, service subscriber A's group ID is represented by a, B's group ID is represented by b, and C's group ID is represented by c.. A group call area is a fixed area constituted by a group of cells in the network. A subscriber can uniquely identify a predefined voice group call by a group ID and a group call area. For example, service subscriber A in Figure 1 can find corresponding voice group call VGCS 1 by using group ID a and group call area I. Each one of dispatchers w, x, y, z in Figure 1 can be a fixed network subscriber or a mobile network subscriber.

A calling subscriber or a destination subscriber involved in a VGCS service can be a service subscriber or a dispatcher. A destination subscriber refers to a destination service subscriber located in a group call area and identified by a called group ID, or a destination dispatcher. In a VGCS service, a destination service subscriber is notified of the existence of a group call by a group ID rather than by paging, and a destination dispatcher is called through a called ID (such as the International Mobile Station Identity). A service subscriber will become a destination service subscriber when entering into a group call area and receiving a corresponding group call notification. A destination service subscriber can no longer get connected with a group call once leaving the group call area. As shown in Figure 1, service subscriber A in group call area I is a destination service subscriber of VGCS1. However, if service subscriber A leaves group call area I, it will not be a destination service subscribers of VGCS1 any more.

A VGCS call must be established in a predefined group call area. When a service subscriber initiates a VGCS call, a group call reference and a group call area are uniquely determined according to the cell where the call is initiated and the group ID dialed by the service subscriber. When a dispatcher initiates a VGCS call, the network will check whether the dispatcher is allowed to initiate the call based on the dispatcher ID.

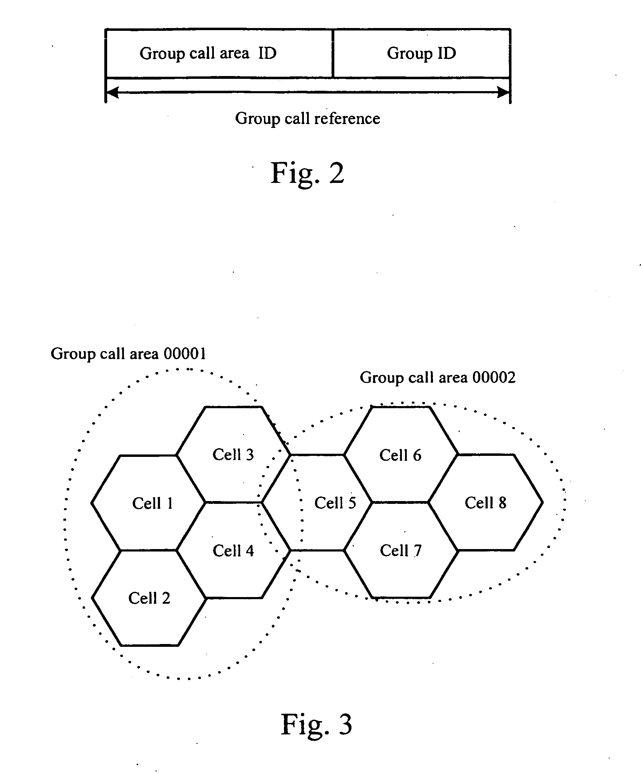

Concretely, in the prior art, when initiating a group call, a service subscriber should input a group ID correlated with the group call and choose a VGCS service type. As shown in Figure 2, the network determines a group call reference based on the inputted group ID and the cell where the service subscriber initiates the group call. The network obtains a group call area correlated with the group call reference. Therefore, a VGCS group call is uniquely determined based on the group call reference and a notification message of the call is broadcasted within the group call area.

For example, in the 3GPP (3rd Generation Partnership Project), a group call reference, which has a maximum length of 8 decimal digits, is used for uniquely identifying a group call in the network and the length of a group ID is in a range of 1 to 6 decimal digits.

For example, a group call reference is constituted by a group ID having a length of 3 decimal digits and a group call area ID having a length of 5 decimal digits. As shown in Figure 3, cells 1 to 4 in the network form a group call area with a group call area ID 00001 and cells 5 to 8 form another group call area with a group call area ID 00002. If service subscriber A initiates a VGCS call in cell 1 and the call has a group ID 200, the network can obtain a group call reference 00001200 correlated with service subscriber A according to the cell (cell 1) where service subscriber A is located and the group ID 200. And then a corresponding voice group call can be initiated according to the group call reference. If service subscriber A initiates a VGCS call in cell 5 and the call has a group ID 530, the network can obtain a group call reference 00002530 correlated with service subscriber A according to the cell (cell 5) where subscriber A is located and the group ID 530.

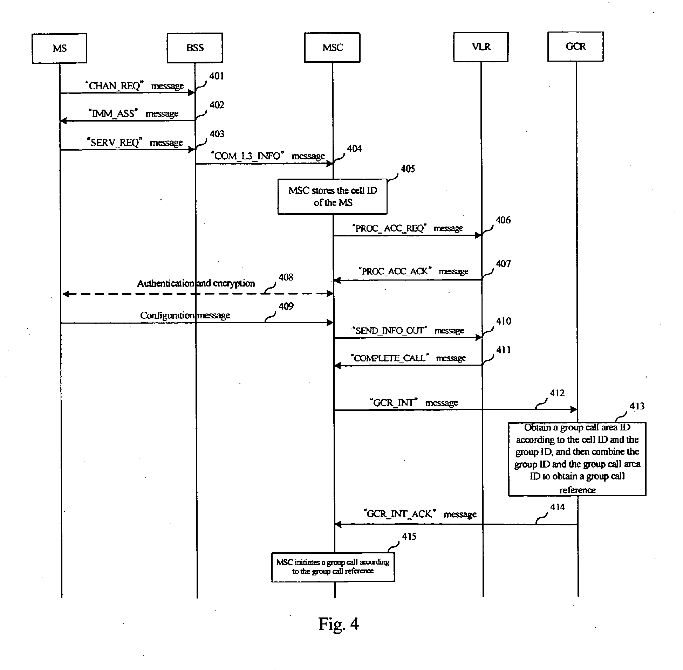

The detailed flow chart of establishing a group call in the prior art is shown in Figure 4.

In 401, when intending to initiate a group call, service subscriber A sends a channel request message "CHAN_REQ" to a Base Station System (BSS) through a Mobile Station (MS).

In 402, upon receiving the message, the BSS returns an Immediate Assignment message "IMM_ASS" to the MS.

In 403, the MS sends a voice group call Service Request message "SERV_REQ" to the BSS and has the cell ID ( e.g., cell 1) of the MS contained in the request.

In 404, according to the request message received from the MS, the BSS sends a corresponding Complete Layer 3 Information message "COM_L3_INFO" to a Mobile service Switching Center (MSC), notifying the MSC of the cell ID of the MS.

In 405, the MSC stores the cell ID of the MS.

In 406 and 407, the MSC sends a Process Access Request "PROC_ACC_REQ" to a Visit Location Register (VLR), and the VLR returns a corresponding Process Access Acknowledge message "PROC_ACC_ACK".

In 408, authentication and encryption are performed between the MS and the MSC.

In 409, the MS sends its group ID (e.g.,200) to the MSC through a message.

In 410, upon receiving the group ID, the MSC sends a Send Information Out request message "SEND_INFO_OUT" to notify the VLR that there is information to be sent.

In 411, upon receiving the message, the VLR returns a Complete Call message "COMPLETE_CALL".

In 412, upon receiving the "COMPLETE_CALL" message, the MSC sends a GCR Interrogation message "GCR_INT" containing the cell ID (e.g., cell 1) of the MS and the group ID (e.g., 200) to a Group Call Register (GCR).

In 413, the GCR obtains a group call reference (e.g., 00001200) based on the cell ID (e.g., cell 1) and the group ID (e.g., 200).

In 414, the GCR returns to the MSC a GCR Interrogation Acknowledge message "GCR_INT_ACK" containing the group call reference (e.g., 00001200) and corresponding group call attribute data which includes a list of cells in the group call area.

In 415, upon receiving the "GCR_INT_ACK" message, the MSC initiates a group call in each cell indicated by the list of cells in the group call area according to the group call reference.

In practical applications, the above solution of initiating a voice group call according to the group call reference in the prior art wastes a large amount of group number resource and is not very suitable for a public trunking network system.

In the prior art, a voice group call is uniquely identified by a group call reference constituted by a group ID and a group call area ID. The same group call initiated by the same subscriber in a different cell may be correlated with a different group call area, which makes the group call more flexible. However, in some network applications such as the practical public trunking network application, a group call is initiated mainly in a fixed area by a subscriber, which need not be correlated with a different group call area. In this case, dividing a group call reference into a group ID and a group call area ID is unnecessary. And such a division greatly reduces the combination amount of the group call references and wastes a large amount of group number resource. For this reason, such solution is not very suitable for the public trunking network system in which there are a large number of subscribers, and many of the subscribers need to be assigned a fixed number section.

### Summary of the Invention

The present invention provides a group call method, a group call register and a group call system to allow more groups in a public trunking network.

A method for a group call in a telecommunication network according to an embodiment of the present invention is provided. The method includes: receiving, by a group call register, a request for obtaining group call attribute data, the request containing a group identification (group ID) ; obtaining, by the group call register, a group call area uniquely correlated with the group ID; generating, by the group call register, a group call reference identifying uniquely the group call according to the group ID; sending, by the group call register, the group call reference and the group call area to a mobile service switching center; and initiating, by the mobile service switching center, the group call in the group call area according to the group call reference.

A group call register according to an embodiment of the present invention is described. The group call register includes: a receiving unit, adapted to receive a request for obtaining group call attribute data which contains a group identification (group ID); an obtaining unit in communication with the receiving unit and adapted to obtain a group call area uniquely correlated with the group ID in the request for obtaining group call attribute data; a generating unit in communication with the receiving unit and adapted to generate a group call reference uniquely identifying a group call according to the group ID in the request for obtaining group call attribute data.

A group call system according to an embodiment of the invention is described. The group call system includes: a mobile service switching center and a group call register in communication with the mobile service switching center, wherein the group call register includes: a receiving unit, adapted to receive a request for obtaining group call attribute data which contains a group identification (group ID), from the mobile service switching center; an obtaining unit in communication with the receiving unit and adapted to obtain a group call area which is uniquely correlated with the group ID in the request for obtaining group call attribute data; a generating unit in communication with the receiving unit and adapted to generate a group call reference uniquely identifying a group call according to the group ID in the request for obtaining group call attribute data; a transmitting unit in communication with the obtaining unit and the generating unit and adapted to transmit the group call reference and the group call area to the mobile service switching center.

In the embodiments of the present invention, a group call reference is generated according to a group ID.

Furthermore and typically, a group ID is taken as a group call reference directly. In other words, the group ID is equal to the group call reference, which means the length of the group ID is equal to the length of the group call reference and the content of the group ID is the same as the content of the group call reference. Therefore, the capacity for group IDs may be the same as the capacity for group call references. Both a group ID and a group call reference can have a length of 8 or more than 8 decimal digits. Compared with the prior art, in which a group ID may have a length of at most 6 decimal digits, the embodiments of the present invention expands the capacity for groups in the public trunking network over hundreds of times. In a public trunking network opened to the public, because there are a large number of subscribers and block subscribers usually need number sections, there is a great shortage of the resource of group numbers with a maximum length of 6 decimal digits. By expanding capacity for group IDs, the embodiments of the present invention greatly enhance the practical value of the 3GPP trunking solution utilized in the public trunking network.

Because a group call reference is generated according to a group ID, a group ID is only correlated with a group call area, which simplifies group call data management in the GCR. In practical application of the public trunking network, a group call is initiated in a fixed area in most of the cases. Therefore the solution of the present invention, in which a group ID is only correlated with one group call area, may completely meet the demand of the public trunking network.

In the embodiments of the present invention, there is no change to interfaces between the GCR and other devices, such as the MSC, in the network. Therefore, the GCR has a better compatibility with existing devices in the network.

### Brief Description of the Drawings

Figure 1 is a conventional conceptual logic diagram of a VGCS service call.

Figure 2 is a conventional structural diagram of a group call reference.

Figure 3 is a conventional schematic diagram of a group call area partition.

Figure 4 is a conventional flow chart of a group call method.

Figure 5 is a flow chart of a group call method implemented in a 3GPP network according to an embodiment of the present invention.

Figure 6 is a schematic block diagram of a group call register according to an embodiment of the present invention.

Figure 7 is a schematic block diagram of a group call system according to an embodiment of the present invention.

Figure 8 is a schematic diagram of message interactions in the group call system according to the embodiment as shown in Figure 7.

### Detailed Description of the Embodiments

The present invention is not limited to a 3GPP network system but can be applied to other network systems. To describe embodiments of the present invention in a more convenient and clearer way, the 3GPP network system is taken as an example in the following description.

In embodiments of the present invention, the relationship that each group ID is uniquely correlated with a group call area is predefined in the 3GPP network. When receiving a request for obtaining a group call attribute data which contains a group ID, a GCR inquires a group call area which is uniquely correlated with the group ID. And then the GCR generates a group call reference which uniquely identifies the group call according to the group ID. Finally, a group call can be initiated in the group call area according to the group call reference.

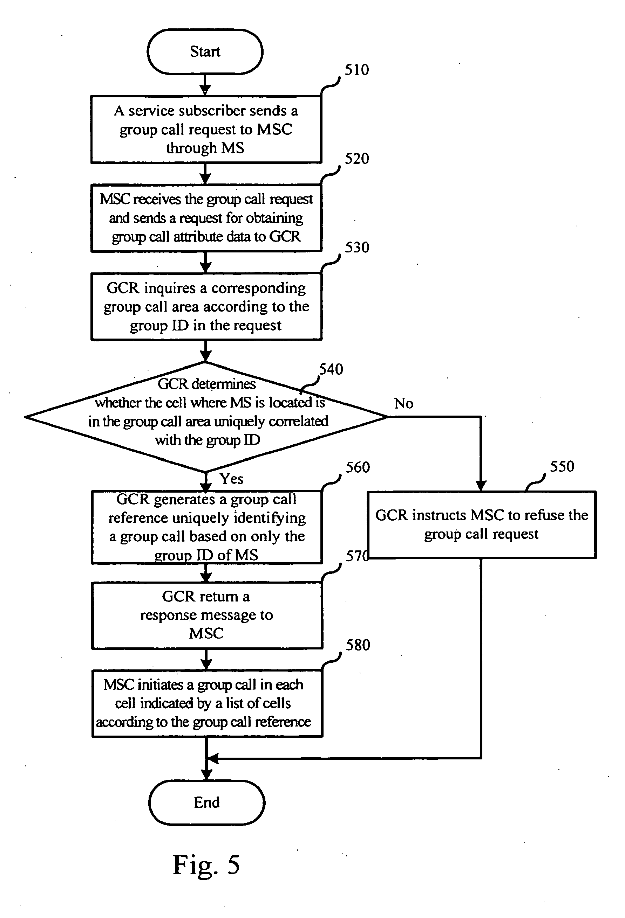

A group call method implemented in a 3GPP network according to an embodiment of the present invention is provided. In one embodiment, the 3GPP network is a public trunking network. Referring to Figure 5, the method is as follows

In block 510, when a service subscriber in the public trunking network intends to initiate a group call, the service subscriber sends a group call request to an MSC via an MS.

In block 520, upon receiving the group call request, the MSC sends a request for obtaining group call attribute data to a GCR. The request for obtaining group call attribute data contains the ID of a cell where the MS is located and a group ID of the MS. The maximum length of the group ID may be equal to the maximum length of a group call reference, such as 8 decimal digits. Furthermore, the maximum length of the group ID may be more than 8 decimal digits.

In block 530, upon receiving the request for obtaining group call attribute data from the MSC, the GCR inquires a corresponding group call area according to the group ID contained in the request. Specifically, in practical applications of the public trunking network, it is of great possibility that a group call is initiated only in a fixed area. Therefore, the group ID may be correlated with only one group call area. The specific correlation between the group ID and the group call area is predefined in the GCR or in an external server that the GCR can access. Accordingly, upon receiving the request for obtaining group call attribute data from the MSC, the GCR may inquire the corresponding group call area according to the group ID in the request for obtaining group call attribute data.

In block 540, according to the cell ID in the request for obtaining group call attribute data received from the MSC, the GCR determines whether the cell where the MS is located is in the group call area which is uniquely correlated with the group ID. If the cell where the MS is located is in the group call area which is uniquely correlated with the group ID, the method proceeds to block 560; if the cell where the MS is located is not in the group call area which is uniquely correlated with the group ID, the method proceeds to block 550, in which the GCR instructs the MSC to refuse the group call request from the MS.

In block 560, the GCR generates a group call reference uniquely identifying a group call according to the group ID of the MS. If it is the case that the length of the group ID is equal to the length of the group call reference, for example, the lengths of both the group ID and the group call reference are at least 8 decimal digits, the GCR can take the group ID directly as the group call reference. In other words, the group ID is equal to the group call reference, which means the length of the group ID is equal to the length of the group call reference and the content of the group ID is the same as the content of the group call reference. For example, if the group ID of the MS is an 8-decimal-digit integer 00001200, the GCR can take 00001200 directly as the group call reference in this block without necessitating other inquiries or combination operations, thus simplifying group call data management and group call reference generating procedure in the GCR.

In block 570, the GCR returns to the MSC a response message containing the generated group call reference and a list of cells in the group call area.

In block 580, the MSC initiates a group call in each cell indicated by the list of cells according to the group call reference according to the list of cells and the group call reference in the response message.

Those skilled in the art should understand that all or part of the blocks of the method according to the above embodiment can be accomplished in the manner of using programs to instruct relevant hardware, and the programs can be stored in computer-readable storage mediums such as ROM/RAM, magnetic discs, optical discs, etc.. There is no change to interfaces between the GCR and other devices, such as the MSC in the network. In this way, the GCR is more compatible with the existing devices in the network.

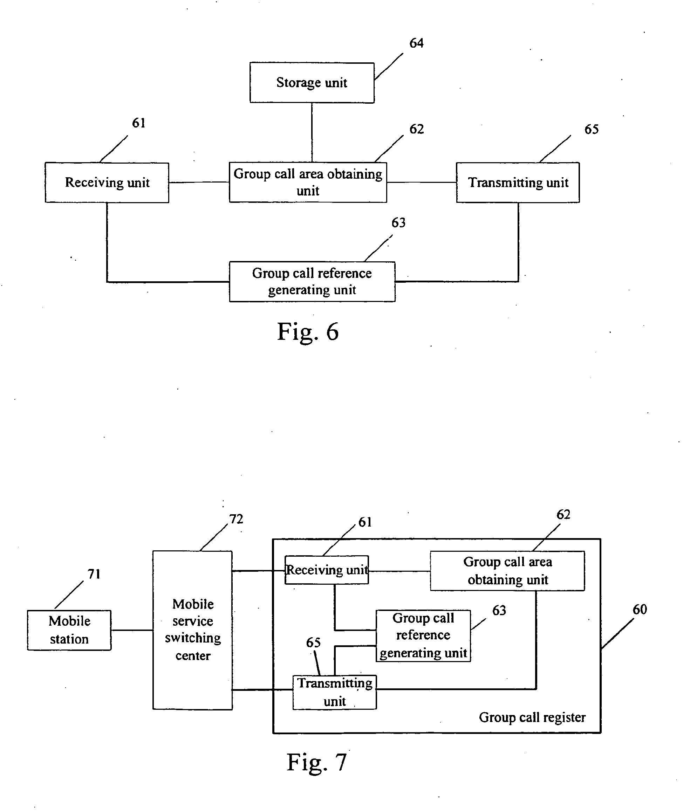

Another embodiment of the present invention provides a group call register. As shown in Figure 6, the group call register includes: a receiving unit 61, a group call area obtaining unit 62 and a group call reference generating unit 63. The receiving unit 61 is adapted to receive a request for obtaining group call attribute data, which contains a group ID, from an MSC in the network. For example, in the embodiment of the present invention as shown in Figure 5, upon receiving the group call request from the MS, the MSC sends the request for obtaining group call attribute data to the group call register. The group call area obtaining unit 62 is adapted to obtain a group call area which is uniquely correlated with a group ID. The correlation between the group ID and the group call area may be predefined in the group call register or in an external server.

For example, referring to Figure 6, a storage unit 64 is provided in the group call register, for storing the correlation between the group ID and the group call area. The group ID is correlated with only one group call area. The length of the group ID is equal to the length of the group call reference. The correspondent group ID may be taken directly as the group call reference. In other words, the group ID is equal to the group call reference, which means the length of the group ID is equal to the length of the group call reference and the content of the group ID is the same as the content of the group call reference. For example, the group ID and the group call reference may be expressed as an integer having 8 or more than 8 decimal digits.

The group call reference generating unit 63 is adapted to generate a group call reference uniquely identifying a group call according to the group ID. Typically, the group call reference generating unit 63 takes the group ID as the group call reference identifying a group call.

Additionally, a transmitting unit 65 may be provided in the group call register, for transmitting the group call reference and the group call area to the MSC. Accordingly, the MSC can initiate a group call in the group call area according to the group call reference.

The embodiment of the present invention may expand the capacity for groups in the public trunking network over hundreds of times, compared with the prior art that a group ID has a length of at most 6 decimal digits, even in the case that both a group ID and a group call reference have a length of 8 decimal digits. Such expansion alleviates the shortage of group number resource in the public trunking network.

Moreover, it needs to be clear that, the units in the embodiment are logic concepts and they can be physically realized in different modules or in the same module. Provided that the different modules or the same module possesses the above functions to thereby achieve the effect of the invention, the different modules or the same module falls within the protection scope of the invention.

Another embodiment of the present invention provides a group call system. As shown in Figure 7, the group call system includes: a mobile station 71, a mobile service switching center 72, and a group call register 60. The group call register 60 includes: a receiving unit 61, a group call area obtaining unit 62, a group call reference generating unit 63, and a transmitting unit 65. The receiving unit 61 is adapted to receive a request for obtaining group call attribute data, which contains a group ID, from the mobile service switching center 72. The group call area obtaining unit 62 is adapted to obtain a group call area uniquely correlated with the group ID. The correlation between the group ID and the group call area may be predefined in the group call register 60, for example in the storage unit 64 of the group call register in the embodiment as shown in Figure 6. Practically, the correlation between the group ID and the group call area may be predefined in an external server that the group call register can access. In the correlation between the group ID and the group call area, the group ID is correlated with only one group call area. The length of the group ID is equal to that of the group call reference and the corresponding group ID may be taken directly as the group call reference. In other words, the group ID is equal to the group call reference, which means the length of the group ID is equal to the length of the group call reference and the content of the group ID is the same as the content of the group call reference. The group call reference generating unit 63 is adapted to generate a group call reference uniquely identifying a group call according to the group ID. Typically, the group ID is taken as the group call reference identifying the group call. The transmitting unit 65 is adapted to transmit the group call reference and the group call area to the mobile service switching center 72. Thus, the mobile service switching center 72 can initiate the group call in the group call area according to the group call reference.

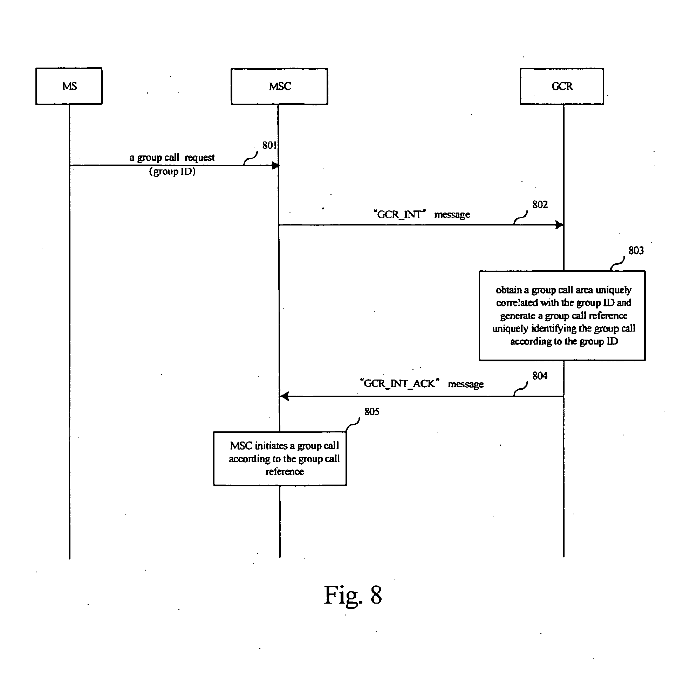

In the system, the flow of message interactions among entities is shown in Figure 8:

801, an MS sends to an MSC a group call request containing a group ID;

802, upon receiving the group call request, the MSC sends the group ID contained in the group call request to a GCR through a GCR Interrogation message "GCR_INT";

803, according to the group ID, the GCR inquires a group call area uniquely correlated with the group ID and generates a group call reference uniquely identifying the group call according to the group ID;

804, the GCR returns to the MSC a GCR Interrogate Acknowledge message "GCR_INT_ACK" containing the group call reference and corresponding group call attribute data which includes a list of cells in the group call area;

805, upon receiving the GCR Interrogate Acknowledge message, the MSC initiates a group call in each cell indicated by the list of cells in the group call area according to the group call reference.

As can be seen from the above embodiment, the group call reference generated by the group call register in the system according to the group ID of the MS has the same length as that of the group ID of the MS. Therefore, compared with the prior art, the system can expand the capacity for groups in the public trunking network over hundreds of times, thus alleviating the shortage of the group number resource in the public trunking network

Although the present invention is described and illustrated with reference to the preferred embodiments, those skilled in the art should understand that various changes and modifications may be made to the present invention without departing from the scope of the present invention, and it is intended that the present invention covers these changes and modifications provided that they fall within the scope of the present invention as defined by the appended claims.

## Claims

1. A method for a group call in a telecommunication network, **characterized by** comprising:
receiving (520), by a group call register, a request for obtaining group call attribute data , the request containing a group identification, group ID;
obtaining (530), by the group call register, a group call area uniquely correlated with the group identification;
generating (560), by the group call register, a group call reference identifying uniquely the group call according to the group identification;
sending (570), by the group call register, the group call reference and the group call area to a mobile service switching center; and
initiating (580), by the mobile service switching center, the group call in the group call area according to the group call reference.

2. The method according to claim 1, wherein the generating a group call reference according to the group identification comprises:
taking the group identification directly as the group call reference, and wherein the group identification is equal to the group call reference.

3. The method according to claim 1 or 2, further comprising:
predefining a correlation between the group identification and the group call area in the group call register or in an external server that the group call register can access.

4. The method according to claim 1, further comprising:
receiving, by the mobile service switching center, a group call request from a mobile station; and
sending, by the mobile service switching center, the request for obtaining group call attribute data to the group call register.

5. The method according to claim 4, wherein
the request for obtaining group call attribute data further comprises an identification of a cell where the mobile station is located, and
the method further comprises:
determining, by the group call register, whether the cell is in the group call area uniquely correlated with the group identification based on the identification of the cell; and
if the cell is in the group call area, continuing the group call method;
if the cell is not in the group call area, refusing the group call (550).

6. The method according to any one of claims 1 to 5, wherein the method is applied in a public trunking network.

7. A group call register, **characterized by** comprising:
a receiving unit (61), adapted to receive a request for obtaining group call attribute data which contains a group identification, group ID;
an obtaining unit (62)in communication with the receiving unit and adapted to obtain a group call area uniquely correlated with the group identification in the request for obtaining group call attribute data ;
a generating unit (63) in communication with the receiving unit and adapted to generate a group call reference uniquely identifying a group call according to the group identification in the request for obtaining group call attribute data.

8. The group call register according to claim 7, further comprising:
a storage unit (64), adapted to store a correlation between the group identification and the group call area, wherein the correlation is for the obtaining unit to obtain the group call area, and
the group identification is uniquely correlated with the group call area.

9. The group call register according to claim 7 or 8, further comprising:
a transmitting unit (65) in communication with the obtaining unit and the generating unit and adapted to transmit the group call reference and the group call area to a mobile service switching center.

10. A group call system, comprising:
a mobile service switching center (72) and a group call register (60) in communication with the mobile service switching center, **characterized in that** the group call register (60) comprises:
a receiving unit (61), adapted to receive a request for obtaining group call attribute data which contains a group identification, group ID, from the mobile service switching center;
an obtaining unit (62) in communication with the receiving unit and adapted to obtain a group call area which is uniquely correlated with the group identification in the request for obtaining group call attribute data;
a generating unit (63) in communication with the receiving unit and adapted to generate a group call reference uniquely identifying a group call according to the group identification in the request for obtaining group call attribute data;
a transmitting unit (65) in communication with the obtaining unit and the generating unit and adapted to transmit the group call reference and the group call area to the mobile service switching center.

11. The group call system according to claim 10, wherein the group call register further comprises:
a storage unit, adapted to store a correlation between the group identification and the group call area, wherein the correlation is for the group call area obtaining unit to obtain the group call area and, the group identification is uniquely correlated with the group call area.

## Patentansprüche

1. Verfahren für eine Gruppenverbindung in einem Telekommunikationsnetz, das **dadurch gekennzeichnet ist, dass** es Folgendes umfasst:
Empfangen (520) einer Anforderung zum Abrufen von Gruppenverbindungsattributdaten, die eine Gruppenkennung (Gruppen-ID) enthält, durch ein Gruppenverbindungsregister,
Abrufen (530) einer eindeutig mit der Gruppenkennung korrelierenden Gruppenverbindungszone durch das Gruppenverbindungsregister,
Erzeugen (560) einer Gruppenverbindungsreferenz, die die Gruppenverbindung der Gruppenkennung entsprechend eindeutig identifiziert, durch das Gruppenverbindungsregister,
Senden (570) der Gruppenverbindungsreferenz und der Gruppenverbindungszone zu einer Mobilvermittlungsstelle durch das Gruppenverbindungsregister und
Initiieren (580) der Gruppenverbindung in der Gruppenverbindungszone entsprechend der Gruppenverbindungsreferenz durch die Mobilvermittlungsstelle.

2. Verfahren nach Anspruch 1, bei dem das Erzeugen einer der Gruppenkennung entsprechenden Gruppenverbindungsreferenz Folgendes umfasst:
Verwenden der Gruppenkennung direkt als Gruppenverbindungsreferenz, und wobei
die Gruppenkennung der Gruppenverbindungsreferenz gleicht.

3. Verfahren nach Anspruch 1 oder 2, das des Weiteren Folgendes umfasst:
Vordefinieren einer Korrelation zwischen der Gruppenkennung und der Gruppenverbindungszone in dem Gruppenverbindungsregister oder in einem externen Server, auf den das Gruppenverbindungsregister zugreifen kann.

4. Verfahren nach Anspruch 1, das des Weiteren Folgendes umfasst:
Empfangen einer Gruppenverbindungsanforderung von einer Mobilstation durch die Mobilvermittlungsstelle und
Senden der Anforderung zum Abrufen von Gruppenverbindungsattributdaten zum Gruppenverbindungsregister durch die Mobilvermittlungsstelle.

5. Verfahren nach Anspruch 4, bei dem
die Anforderung zum Abrufen von Gruppenverbindungsattributdaten des Weiteren eine Kennung einer Funkzelle umfasst, in der sich die Mobilstation befindet, und
das Verfahren des Weiteren Folgendes umfasst:
Ermitteln auf der Grundlage der Kennung der Funkzelle, ob sich diese in der eindeutig mit der Gruppenkennung korrelierenden Gruppenverbindungszone befindet, durch das Gruppenverbindungsregister und
Weiterführen des Gruppenverbindungsverfahrens, wenn sich die Funkzelle in der Gruppenverbindungszone befindet,
Ablehnen (550) der Gruppenverbindung, wenn sich die Funkzelle nicht in der Gruppenverbindungszone befindet.

6. Verfahren nach einem der Ansprüche 1 bis 5, wobei das Verfahren in einem öffentlichen Bündelfunknetz angewendet wird.

7. Gruppenverbindungsregister, das **dadurch gekennzeichnet ist, dass** es Folgendes umfasst:
eine Empfangseinheit (61), die so ausgelegt ist, dass sie eine Anforderung zum Abrufen von Gruppenverbindungsattributdaten empfängt, die eine Gruppenkennung (Gruppen-ID) enthält,
eine Abrufeinheit (62), die mit der Empfangseinheit in Verbindung steht und so ausgelegt ist, dass sie eine eindeutig mit der Gruppenkennung in der Anforderung zum Abrufen von Gruppenverbindungsattributdaten korrelierende Gruppenverbindungszone abruft,
eine Erzeugungseinheit (63), die mit der Empfangseinheit in Verbindung steht und so ausgelegt ist, dass sie eine Gruppenverbindungsreferenz erzeugt, die entsprechend der Gruppenkennung in der Anforderung zum Abrufen von Gruppenverbindungsattributdaten eine Gruppenverbindung eindeutig identifiziert.

8. Gruppenverbindungsregister nach Anspruch 7, das des Weiteren Folgendes umfasst:
eine Speichereinheit (64), die so ausgelegt ist, dass sie eine Korrelation zwischen der Gruppenkennung und der Gruppenverbindungszone speichert, wobei die Korrelation der Abrufeinheit zum Abrufen der Gruppenverbindungszone dient, und
die Gruppenkennung eindeutig mit der Gruppenverbindungszone korreliert.

9. Gruppenverbindungsregister nach Anspruch 7 oder 8, das des Weiteren Folgendes umfasst:
eine Übertragungseinheit (65), die mit der Abrufeinheit und der Erzeugungseinheit in Verbindung steht und so ausgelegt ist, dass sie die Gruppenverbindungsreferenz und die Gruppenverbindungszone zu einer Mobilvermittlungsstelle überträgt.

10. Gruppenverbindungssystem, das Folgendes umfasst:
eine Mobilvermittlungsstelle (72) und ein mit der Mobilvermittlungsstelle in Verbindung stehendes Gruppenverbindungsregister (60), **dadurch gekennzeichnet, dass**
das Gruppenverbindungsregister (60) Folgendes umfasst:
eine Empfangseinheit (61), die so ausgelegt ist, dass sie eine Anforderung zum Abrufen von Gruppenverbindungsattributdaten von der Mobilvermittlungsstelle empfängt, die eine Gruppenkennung (Gruppen-ID) enthält,
eine Abrufeinheit (62), die mit der Empfangseinheit in Verbindung steht und so ausgelegt ist, dass sie eine eindeutig mit der Gruppenkennung in der Anforderung zum Abrufen von Gruppenverbindungsattributdaten korrelierende Gruppenverbindungszone abruft,
eine Erzeugungseinheit (63), die mit der Empfangseinheit in Verbindung steht und so ausgelegt ist, dass sie eine Gruppenverbindungsreferenz erzeugt, die entsprechend der Gruppenkennung in der Anforderung zum Abrufen von Gruppenverbindungsattributdaten eine Gruppenverbindung eindeutig identifiziert,
eine Übertragungseinheit (65), die mit der Abrufeinheit und der Erzeugungseinheit in Verbindung steht und so ausgelegt ist, dass sie die Gruppenverbindungsreferenz und die Gruppenverbindungszone zu der Mobilvermittlungsstelle überträgt.

11. Gruppenverbindungssystem nach Anspruch 10, bei dem das Gruppenverbindungsregister des Weiteren Folgendes umfasst:
eine Speichereinheit (64), die so ausgelegt ist, dass sie eine Korrelation zwischen der Gruppenkennung und der Gruppenverbindungszone speichert, wobei die Korrelation der Gruppenverbindungszone-Abrufeinheit zum Abrufen der Gruppenverbindungszone dient und die Gruppenkennung eindeutig mit der Gruppenverbindungszone korreliert.

## Revendications

1. Procédé pour un appel de groupe dans un réseau de télécommunication, **caractérisé par le fait qu'**il comporte les opérations consistant à :
recevoir (520), par un registre d'appel de groupe, une demande permettant de collecter des données d'attribut d'appel de groupe, la demande contenant une identification de groupe, ID groupe ;
collecter (530), par le registre d'appel de groupe, une zone d'appel de groupe en corrélation de manière unique avec l'identification de groupe ;
générer (560), par le registre d'appel de groupe, une référence d'appel de groupe identifiant d'une manière unique l'appel de groupe en fonction de l'identification de groupe ;
émettre (570), par le registre d'appel de groupe, la référence d'appel de groupe et la zone d'appel de groupe à un centre de commutation de service mobile ; et
lancer (580), par le centre de commutation de service mobile, l'appel de groupe dans la zone d'appel de groupe en fonction de la référence d'appel de groupe.

2. Procédé selon la revendication 1, **caractérisé en ce que** l'action consistant à générer une référence d'appel de groupe en fonction de l'identification de groupe comporte l'action consistant à :
considérer l'identification de groupe directement comme référence d'appel de groupe, et **caractérisé en ce que** l'identification de groupe est égale à la référence d'appel de groupe.

3. Procédé selon la revendication 1 ou la revendication 2, comportant par ailleurs l'action consistant à :
prédéfinir une corrélation entre l'identification de groupe et la zone d'appel de groupe dans le registre d'appel de groupe ou dans un serveur externe auquel le registre d'appel de groupe peut avoir accès.

4. Procédé selon la revendication 1, comportant par ailleurs les actions consistant à :
recevoir, par le centre de commutation de service mobile, une demande d'appel de groupe en provenance d'une station mobile ; et
émettre, par le centre de commutation de service mobile, la demande permettant de collecter des données d'attribut d'appel de groupe au registre d'appel de groupe.

5. Procédé selon la revendication 4, **caractérisé en ce que**
la demande permettant de collecter des données d'attribut d'appel de groupe comporte par ailleurs une identification d'une cellule où se trouve la station mobile, et
le procédé comporte par ailleurs les actions consistant à :
déterminer, par le registre d'appel de groupe, si la cellule est dans la zone d'appel de groupe en corrélation de manière unique avec l'identification de groupe en fonction de l'identification de la cellule ; et
si la cellule est dans la zone d'appel de groupe, continuer le procédé d'appel de groupe ;
si la cellule n'est pas dans la zone d'appel de groupe, refuser l'appel de groupe (550).

6. Procédé selon l'une quelconque des revendications 1 à 5, **caractérisé en ce que** le procédé est appliqué dans un réseau interurbain public.

7. Registre d'appel de groupe, **caractérisé en ce qu'**il comporte :
un module de réception (61), adapté pour recevoir une demande permettant de collecter des données d'attribut d'appel de groupe qui contient une identification de groupe, ID groupe ;
un module de collecte (62) en communication avec le module de réception et adapté pour collecter une zone d'appel de groupe en corrélation de manière unique avec l'identification de groupe dans la demande permettant de collecter des données d'attribut d'appel de groupe ;
un module de génération (63) en communication avec le module de réception et adapté pour générer une référence d'appel de groupe identifiant de manière unique un appel de groupe en fonction de l'identification de groupe dans la demande permettant de collecter des données d'attribut d'appel de groupe.

8. Registre d'appel de groupe selon la revendication 7, comportant par ailleurs :
un module de stockage (64), adapté pour stocker une corrélation entre l'identification de groupe et la zone d'appel de groupe, comme quoi la corrélation permet au module de collecte de collecter la zone d'appel de groupe, et
l'identification de groupe est en corrélation de manière unique avec la zone d'appel de groupe.

9. Registre d'appel de groupe selon la revendication 7 ou la revendication 8, comportant par ailleurs :
un module de transmission (65) en communication avec le module de collecte et le module de génération et adapté pour transmettre la référence d'appel de groupe et la zone d'appel de groupe à un centre de commutation de service mobile.

10. Système d'appel de groupe, comportant :
un centre de commutation de service mobile (72) et un registre d'appel de groupe (60) en communication avec le centre de commutation de service mobile, **caractérisé en ce que** le registre d'appel de groupe (60) comporte :
un module de réception (61), adapté pour recevoir une demande permettant de collecter des données d'attribut d'appel de groupe qui contient une identification de groupe, ID groupe, en provenance du centre de commutation de service mobile ;
un module de collecte (62) en communication avec le module de réception et adapté pour collecter une zone d'appel de groupe qui est en corrélation de manière unique avec l'identification de groupe dans la demande permettant de collecter des données d'attribut d'appel de groupe ;
un module de génération (63) en communication avec le module de réception et adapté pour générer une référence d'appel de groupe identifiant de manière unique un appel de groupe en fonction de l'identification de groupe dans la demande permettant de collecter des données d'attribut d'appel de groupe ;
un module de transmission (65) en communication avec le module de collecte et le module de génération et adapté pour transmettre la référence d'appel de groupe et la zone d'appel de groupe au centre de commutation de service mobile.

11. Système d'appel de groupe selon la revendication 10, **caractérisé en ce que** le registre d'appel de groupe comporte par ailleurs :
un module de stockage, adapté pour stocker une corrélation entre l'identification de groupe et la zone d'appel de groupe, comme quoi la corrélation permet au module de collecte de zone d'appel de groupe de collecter la zone d'appel de groupe, et l'identification de groupe est en corrélation de manière unique avec la zone d'appel de groupe.
